Europäisches Patentamt

European Patent Office

Office européen des brevets

(19)

(11) EP 1 008 296 A1

(12) EUROPEAN PATENT APPLICATION

(43) Date of publication:
14.06.2000 Bulletin 2000/24

(51) Int Cl.7: **A01N 41/02**, A01N 43/06,
A01N 43/36, A01N 43/40

(21) Application number: 99309478.8

(22) Date of filing: 26.11.1999

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• Chapman, John Steven<br>  Ambler, Pennsylvania 19002 (US)<br>• Ghosh, Tirthankar<br>  Oreland, Pennsylvania 19075 (US) |
| (30) Priority: 09.12.1998 US 111536 P | (74) Representative: **Davis, Carole Amanda et al**<br>**Rohm and Haas (UK) Limited**<br>**European Operations Patent Dept.,**<br>**Lennig House,**<br>**2 Mason's Avenue**<br>**Croydon, Surrey CR9 3NB (GB)** |
| (71) Applicant: **ROHM AND HAAS COMPANY**<br>**Philadelphia, Pennsylvania 19106-2399 (US)** | |

(54) **Alkoxy disulfides as antimicrobial agents**

(57) Disclosed is a method of inhibiting the growth of microorganisms in, at, or on a locus subject to microbial attack, comprising introducing to said locus an antimicrobially effective amount of at least one alkoxy disulfide of formula:

$$R^1\text{-}CHR^3\text{-}O\text{-}S\text{-}S\text{-}O\text{-}CHR^4\text{-}R^2 \qquad \text{(I)}$$

wherein:

$R^1, R^2$ are independently selected from 5- or 6-membered aromatic rings, optionally substituted with up to 3 $e\cdot$ donating substituents of which 2 can optionally be combined to form another ring; and

$R^3, R^4$ are independently selected from H, $CH_3$, or $CH_2CH_3$.

EP 1 008 296 A1

**Description**

BACKGROUND OF THE INVENTION

The present invention relates to a method for inhibiting the growth of microorganisms. In particular, the present invention relates to the use of certain alkoxy disulfides as antimicrobial agents.

Antimicrobial agents are used commercially to prevent microbial growth in water cooling towers, metalworking fluid systems, paints, and other loci. Currently available antimicrobial agents include mixtures of 5-chloro-2-methyl-3-isothiazolone and 2-methyl-3-isothiazolones. While these isothiazolones are very effective in preventing microbial growth, they suffer from being slow killing and unstable under certain conditions. Nitrate salts are effective stabilizers for 3-isothiazolones, but the level of salt usually required can cause problems such as latex coagulation and salt build up in closed systems. There is therefore a continued need for antimicrobial agents that are stable, as well as antimicrobial compositions which do not have a high salt content.

Alkoxy disulfides have been reported in the literature. See, for example, Thompson, Q.E., "Organic Esters of Bivalent Sulfur. I. Dialkoxy Disulfides," J. Org. Chem., **30**: 2692 (1965), and US Patent No. 3,376,322 (Thompson). Such compounds have been disclosed as oil additives to increase lubricity, as insecticides or agricultural fungicides, and as curing agents for the vulcanization of rubber, but are not known as antimicrobial agents.

STATEMENT OF THE INVENTION

The present invention is directed to a method of inhibiting the growth of microorganisms in, at, or on a locus subject to microbial attack, comprising introducing to said locus an antimicrobially effective amount of at least one compound of formula:

$$R^1\text{-CHR}^3\text{-O-S-S-O-CHR}^4\text{-R}^2$$

wherein: $R^1$, $R^2$ are independently selected from 5- or 6-membered aromatic rings, optionally substituted with up to 3 $e$- donating substituents of which 2 can optionally be combined to form another ring; and $R^3$, $R^4$ are independently selected from H, $CH_3$, or $CH_2CH_3$.

The present invention is also directed to antimicrobial compositions comprising a carrier and a compound of formula:

$$R^1\text{-CHR}^3\text{-O-S-S-O-CHR}^4\text{-R}^2$$

wherein: $R^1$, $R^2$ are independently selected from 5- or 6-membered aromatic rings, optionally substituted with up to 3 $e$- donating substituents of which 2 can optionally be combined to form another ring; and $R^3$, $R^4$ are independently selected from H, $CH_3$, or $CH_2CH_3$.

The present invention is in a third embodiment also directed to a method for treating microbial infections, comprising the local or systemic application of an antimicrobial composition as described above.

DETAILED DESCRIPTION OF THE INVENTION

As used in this specification, the term "antimicrobial agent" refers both to a compound capable of inhibiting microbial growth (a preservative), and a compound capable of reducing microbial concentration (a disinfecting agent), within a given system. The term "antimicrobial activity" refers to the activity of the antimicrobial agents to eliminate, inhibit or prevent the growth of microorganisms. The terms "microbial organism," "microbe" and "microorganism" are used interchangeably and refer to microorganisms such as, but not limited to, fungi, bacteria, and algae. The term "locus" or "loci" refers to an industrial system or product subject to contamination by microorganisms. The following abbreviations are used throughout this specification: L = liter; mL = milliliter; μL = microliter; g = grams; mol = moles; mmol = millimoles; wt% = percent by weight; mp = melting point; EtOAc = ethyl acetate; t-BuOH = tert-butyl alcohol. Ranges specified are to be read as inclusive, unless specifically identified otherwise.

The compounds of the present invention are alkoxy disulfides of formula:

$$R^1\text{CHR}^3\text{-O-S-S-O-CHR}^4\text{-R}^2 \tag{I}$$

wherein:

R$^1$, R$^2$    are independently selected from 5- or 6-membered aromatic rings. optionally substituted with up to 3 *e*-donating substituents of which 2 can optionally be combined to form another ring; and

R$^3$, R$^4$    are independently selected from H, CH$_3$, or CH$_2$CH$_3$.

As used throughout this specification, "aromatic" includes heteroaromatic, "alkyl" means straight or branched chain (C$_1$-C$_{12}$)alkyl, and "substituted aryl" means an aryl group having one or more of its hydrogens replaced with another substituent group. Examples of substituted phenyl groups include but are not limited to: 4-methylphenyl, 2-chlorophenyl, 3-chlorophenyl, 4-chlorophenyl, 2-methoxyphenyl, and 4-methoxyphenyl. The term "*e* donating substituent (s)" refers to both an alkyl group and a substituent that has unshared pair(s) of electrons. Examples of *e*- donating substituents include: (C$_1$-C$_3$)alkyl, hydroxy, (C$_1$-C$_8$) alkoxy, thiol, (C$_1$-C$_8$) thioalkoxy, amino, (C$_1$-C$_8$) alkylamino, (C$_1$-C$_8$) dialkylamino, nitro, halo, cyano, carboxy, (C$_1$-C$_8$) carboalkoxy, amido, (C$_1$-C$_8$) alkylamido, (C$_1$-C$_8$) dialkylamido. Suitable aromatic ring systems include but are not limited to: benzene, naphthalene, pyridine, pyrrole, furan, and thiophene. Particularly useful aromatic groups include, but are not limited to: benzyl, 4-halobenzyl, 4-nitrobenzyl, and 4-methoxybenzyl.

The above mentioned alkoxydisulfides can be prepared by a variety of methods. One particularly useful method comprises reacting 1 molar equivalent of a mixture of a substituted aromatic alcohol of formulae R$^1$-CHR$^3$-OH and R$^2$-CHR$^4$-OH with one molar equivalent with sulfur monochloride of formula S$_2$Cl$_2$ in the presence of 2 molar equivalents of triethylamine. See, for example, Tardif, S. L., et al., "Diatomic Sulfur Transfer from Stable Alkoxy Disulfides," J. Am. Chem. Soc., **117**:9067 (1995).

The antimicrobial agents of the present invention can be used to inhibit the growth of microorganisms by introducing a microbicidally effective amount of one or more of said agents onto, into, or at a locus subject to microbial attack. Suitable loci include, but are not limited to: cooling towers; air washers; boilers; mineral slurries; wastewater treatment; ornamental fountains; reverse osmosis filtration; ultrafiltration: ballast water; evaporative condensers; heat exchangers: pulp and paper processing fluids; plastics; emulsions and dispersions; paints; latexes; coatings such as varnishes; construction products such as mastics, caulks, and sealants; construction adhesives such as ceramic adhesives, carpet backing adhesives, and laminating adhesives; industrial or consumer adhesives; photographic chemicals; printing fluids; household products such as bathroom disinfectants or sanitizers; cosmetics and toiletries; shampoos; soaps; detergents; industrial disinfectants or sanitizers such as cold sterilants, hard surface disinfectants; floor polishes; laundry rinse water; metalworking fluids; conveyor lubricants; hydraulic fluids; leather and leather products; textiles and textile products such as lazures; wood and wood products such as plywood, chipboard, flakeboard, laminated beams, oriented strandboard, hardboard, and particleboard; petroleum processing fluids; fuel; oilfield fluids such as injection water, fracture fluids, and drilling muds; agriculture adjuvant preservation; surfactant preservation; medical devices; diagnostic reagent preservation; food preservation such as plastic or paper food wrap; pools; and spas. Preferred loci are cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; and coatings.

The antimicrobial agents of the present invention can also have pharmaceutical or veterinary use by applying an antimicrobially effective amount of one or more such agents locally to the infected area, or systemically. In general, such agents would be provided with a pharmaceutically acceptable carrier.

The amount of antimicrobial agents of the present invention suitable to inhibit the growth of microorganisms depends upon the particular use, but is generally between 0.05 and 10,000 ppm, depending on the area to be protected and the route of administration. It is preferred to use between 0.1 and 5000 ppm. For industrial applications and loci such as cooling towers or pulp and paper processing fluids, 0.1 to 250 ppm of the compounds of the present invention is required to inhibit microorganism growth. In cooling towers or pulp and paper processing fluids, it is preferred to use between 0.1 and 50 ppm. Other loci such as construction products, oilfield fluids or emulsions, require 0.5 to 5000 ppm of the compounds of the present invention to inhibit microorganism growth, while loci such as disinfectants or sanitizers may require up to 10,000 ppm. Pharmaceutical and veterinary applications will generally require between 0.1 and 1000 ppm, depending on various factors such as method of dosing (systemic or topical), and type of infection to be treated.

It is known in the art that the performance of antimicrobial agents may be enhanced by combination with one or more other antimicrobial agents. Thus, other known antimicrobial agents may be combined advantageously with the antimicrobial agents of this invention. The compounds of the present invention may be combined with one or more of the following: methylenebis(thiocyanate); isothiazolones such as 2-n-octyl-4-isothiazolin-3-one, 4,5-dichloro-2-n-octyl-4-isothiazolin-3-one, 5-chloro-2-methyl-4-isothiazolin-3-one, 2-methyl-4-isothiazolin-3-one, 1,2-benzisothiazolin-3-one and 2-methyl-4,5-trimethylene-4-isothiazolin-3-one; carbamates such as 3-iodopropargyl-N-butylcarbamate, methyl benzimidazol-2-ylcarbamate, imidazolidinyl urea, diazolidinyl urea, N'-[3,4-dichlorophenyl]-N,N-dimethylurea, 3,4,4'-trichlorocarbanilide, dimethyl dithiocarbamate and disodium ethylene bisdithiocarbamate; heterocyclic compounds such as zinc 2-pyridinethiol-1-oxide, sodium 2-pyridinethiol-1-oxide, 10,10'-oxybisphenoxyarsine, N-trichloromethylthiophthalimide, 5-oxo-3,4-dichloro-1,2-dithiol, 3-bromo-1-chloro-5,5-dimethylhydantoin, 4,4-dimethyl-1,3-dimethylolhydantoin, 2-(thiocyanomethylthio)benzothiazole, 2-methylthio-4-t-butylamino-6-cyclopropylamino-s-triazine, iodopolyvinylpyrrolidone, 3,5-dimethyl-1H-pyrazole-1-methanol, 1-(2-hydroxyethyl)-2-octadecylimidazoline, 4-(2-nitrobutyl)morpholine, triazine, N,N'-methylenebis(5-methyl-1,3-oxazolidine), 2,2'-oxybis(4,4,6-trimethyl-1,3,2-dioxaborinane), 2,2'-(1-methyltrimethylenedioxy) bis(4-ethyl-1,3,2-dioxaborinane), hexahydro-1,3,5-tris(2-hydroxyethyl)-s-triazine; 4,4-dimethyloxazolidine, 3,4,4-trimethyloxazolidine, 4,4'-(2-ethyl-nitrotrimethylene)dimorpholine, 2-methylthio-4-t-butylamino-6-cyclopropylamino-s-triazine, 2,3,5,6-tetrachloro-4-(methylsulfonyl)pyridine, $\alpha$-[2-(4-chlorophenyl)ethyl]-$\alpha$-(1,1-dimethylethyl)-1H-1,2,4-triazolyl-(1)-ethanol, 1-[(2-(2',4'-dichlorophenyl)-4-propyl-1,3-dioxolan-2-yl-methyl]-1H-1,2,4-triazole, didecyldimethylammonium chloride, copper-8-hydroxyquinoline, 1-[2-(2,4-dichlorophenyl)-1,3-dioxolan-2-yl-methyl]-1H-1,2,4-triazole, 2-(4-thiazolyl)-benzimidazole, 3,5-dimethyl-1,3,5-thiadiazine-2-thione, 2-chloro-4,6-bis(ethylamino)-1,3,5-triazine, 2-chloro-4-ethylamino-6-t-butylamino-1,3,5-triazine, 1-(3-chloroallyl)-3,5,7-triaza-1-azoniaadamantane chloride, copper naphthenate, 5-hydroxymethoxymethyl-1-aza-3,7-dioxabicyclo[3.3.0]octane, 5-hydroxymethyl-1-aza-3,7-dioxabicyclo[3.3.0]octane, 7-ethyl-1,5-dioxa-3-azabicyclooctane, cetylpyridinium chloride, 3-bromo-1-chloro-5-dimethyl-5-ethylhydantoindodecyldi(aminoethyl)glycine and 5-hydroxypoly[methyleneoxyethyl]methyl-1-aza-3,7-dioxabicyclo[3.3.0]octane; oxidants such as hydrogen peroxide, t-butyl hydrogen peroxide, cumene hydroperoxide, sodium or calcium hypochlorite, sodium or calcium hypobromite, dichloroisocyanuric acid, trichloroisocyanuric acid, peroxyacetic acid, ozone, chlorine, bromine, chlorine dioxide, potassium peroxymonosulfone, percarbonate, sodium perborate, bromamines and bromine chloride; carboxylic acids and their derivatives such as (E,E)-2,4-hexadienoic acid, benzoic acid, sodium or calcium propionate, ethylenediaminetetraacetic acid disodium salt, sodium hydroxymethylglycinate, benzyl ester of 4-hydroxybenzoic acid, $(C_1-C_4)$alkyl esters of 4-hydroxybenzoic acid, $(C_1-C_4)$alkyl esters of 4-hydroxybenzoic acid sodium salts, dimethylamide of tall oil fatty acids and 2,2-dibromo-3-nitrilopropionamide; alcohols and amines such as 1-(alkylamino)-3-aminopropane, 2-bromo-2-nitro-1,3-propanediol, phenoxyethanol, benzyl alcohol, 2-hydroxymethylaminoethanol, n-2-hydroxypropylaminomethanol, 2-hydroxypropyl methanethiosulfonate, p-nitrophenol and 4-chloro-3,5-dimethylphenol; ammonium and phosphonium salts such as n-alkyl dimethyl benzylammonium chloride, cetyltrimethylammonium chloride, didecyldimethylammonium chloride, poly(hexamethylenebiguanide) hydrochloride, poly[oxyethylene(dimethyliminio) ethylene(dimethyliminio)ethylene dichloride], alkyl dimethyl dichlorobenzylammonium chloride, dodecylguanidine hydrochloride, 2-(decylthio)ethaneamine hydrochloride, quaternary ammonium compounds, tetrakis(hydroxymethyl) phosphonium chloride and tetrakis-(hydroxymethyl)phosphonium sulfate; aldehydes, ketones and formaldehyde releasers such as pentane-1,5-dial, 1,2-benzenedicarboxaldehyde, formaldehyde, 2-bromo-4'-hydroxyacetophenone, tris(hydroxymethyl)nitromethane, and 5-bromo-5-nitro-1,3-dioxane; halogenated aromatic compounds such as 2,4,5,6-tetrachloroisophthalonitrile, 2,4,4'-trichloro-2'-hydroxydiphenyl ether, 2,2'-dihydroxy-5,5'-dichlorodiphenylmethane and 1,6-di-(4'-chlorophenyldiguanide)-hexane; halogenated aliphatic compounds such as 1,2-dibromo-2,4-dicyanobutane, diiodomethyl-p-tolysulfone, dibromonitroethane and hexachlorodimethylsulfone; alkenes such as $\beta$-bromo-$\beta$-nitrostyrene, 1,4-bis(bromoacetoxy)-2-butene, terpene and limonene; inorganic compounds such as bismuth, copper, silver, copper amine complexes, mono copper nitrate, borate salts, zinc oxide, sodium bromide, ammonium bromide, disodium octaborate tetrahydrate, tributyltin oxide and chromated copper arsenate; enzymes such as cellulase, alpha-amylase, protease, polysaccharidase and levan hydrolase; and surfactants such as alkyl aryl esters, polyethoxylated alcohols, polyoxyethylated ethers, phosphate esters, sulfonates, sulfonated fatty materials, sulfosuccinates and dodecylbenzene sulfonic acids.

Preferred known antimicrobial agents to be combined with the antimicrobial agents of the present invention are: methylenebis(thiocyanate), 5-chloro-2-methyl-4-isothiazolin-3-one, 2-methyl-4-isothiazolin-3-one, 2-n-octyl-4-isothiazolin-3-one, 4,5-dichloro-2-n-octyl-4-isothiazolin-3-one, 1,2-benzisothiazolin-3-one, zinc 2-pyridinethiol-1-oxide, sodium 2-pyridinethiol-1-oxide, N'-[3,4-dichlorophenyl]-N,N-dimethylurea, 3-iodopropargyl-N-butylcarbamate, 10,10'-oxybisphenoxyarsine, 2-(thiocyanomethylthio)benzothiazole, 3-bromo-1-chloro-5,5-dimethylhydantoin, 2,2-dibromo-3-nitrilopropionamide, pentane-1,5-dial and 2-bromo-2-nitro-1,3-propanediol.

If one of the antimicrobial agents of the invention is to be combined with a second antimicrobial agent, the weight ratio of the first antimicrobial agent to the second antimicrobial agent is generally 99:1 to 1:99; preferably, 75:25 to 25:75. The total of the combined antimicrobial agents necessary to inhibit or prevent the growth of microorganisms is generally 0.05 to 10,000 ppm, depending on the particular use and the area to be protected.

The compounds of the present invention may also be used in conjunction with non-chemical methods of microbial control such as ultraviolet light, ionizing radiation and copper or silver electrodes.

The antimicrobial agents of the present invention may be added directly to a locus to be protected or may be added as a formulation. The antimicrobial agents of the present invention may be prepared in a variety of liquid or solid formulations. The particular type (that is, solid or liquid) and composition of the formulation used will depend on the locus to be protected and the characteristics of the formulation sought. For example, where splash hazards are a concern or where controlled release is desired, solid formulations may be preferred. Liquid formulations may be preferred where the formulation is metered into a locus over a period of time. Solid formulations are particularly useful in loci such as cooling towers, latexes, and plastics. Liquid formulations are particularly useful in loci such as paints, cosmetics; household cleaners; and water treatment applications.

In general, the liquid formulations of the antimicrobial agents of the present invention may be prepared by dissolving the antimicrobial agent in a carrier such as water, organic solvent, or mixtures thereof. Any organic solvent is suitable as long as it is compatible with the end use and does not destabilize the antimicrobial agent. Suitable organic solvents include, but are not limited to: aliphatic and aromatic hydrocarbons such as xylene and mixtures of alkylbenzenes; halogenated aliphatic and aromatic hydrocarbons such as ethylene dichloride and monochlorobenzene; alcohols including monohydric, dihydric, and polyhydric alcohols; aldehydes; ketones such as acetone, methyl ethyl ketone, and methyl iso-butyl ketone; ethers; glycol ethers; glycol ether acetates; saturated and unsaturated fatty acids having at least four carbon atoms; esters such as ethyl acetate, butyl acetate, glycol esters, and phthalate esters; and phenols. Preferred organic solvents are glycol ethers, glycol ether acetates, aliphatic and aromatic hydrocarbons, and alcohols.

Aqueous formulations of the antimicrobial agents of the present invention may be prepared as dispersions such as polymeric dispersions, emulsions, emulsive concentrates, microemulsions, and microemulsive concentrates. The dispersions, emulsions, and microemulsions can have either oil continuous or water continuous phases. Aqueous formulations typically contain 0.001 to 50 wt% of the antimicrobial agent, 0.5 to 55 wt% surfactant, up to 15 wt% adjuvants, up to 99 wt% organic solvent, and up to 95 wt% water. Suitable surfactants can be anionic, cationic, nonionic, or amphoteric and include but are not limited to: alkyllauryl sulfonate salts and fatty alcohol ethoxylate sulfates, and ethylene oxide-propylene oxide copolymers. Typical adjuvants suitable for use in aqueous formulations include, but are not limited to: thickeners, antifreeze agents, and defoamers.

Suitable solid formulations of the antimicrobial agents of the present invention include, but are not limited to: polymeric encapsulants such as those prepared by interfacial condensation; coacervation; *in-situ* polymerization; inclusion complexes such as clathrates; liposomes; matrix blends such as granulars, dispersible granulars, and wettable powders; and ion exchange resins. Polymeric encapsulants can be prepared having either a core-shell or monolithic structure. Suitable polymeric encapsulants include, but are not limited to: polyureas, polyamides, polyesters, urea-formaldehydes, melamine-formaldehydes, polyacrylic acid and its esters, phenol-formaldehydes, and acetoacetates.

Inclusion complexes may be prepared by incorporating the antimicrobial agent of the present invention in a host molecule. Suitable host molecules include, but are not limited to: a-cyclodextrin; b-cyclodextrin; g-cyclodextrin; cyclodextrin derivatives, such as methyl-b-cyclodextrin; crown ethers; ureas; hydroquinones; dichlorophene; hydroxybenzophenone; and 1,1,2,2-tetrakis(4-hydroxyphenyl)ethane. The inclusion complex can be used as a solid composition, adsorbed onto a solid carrier, or dispersed in a non-reactive solvent. Inclusion complexes are useful in water treatment, metalworking fluid, and paint applications.

Liposomes can be prepared by dissolving the antimicrobial agents of the present invention and a lipid (such as a phospholipid) in a suitable solvent, such as chloroform. The solvent is removed, a buffer added, and the composition is agitated to produce the desired particle size. The liposomes may be multilamellar, unilamellar, or have large or small particle size. Liposomes are useful in solvent based paint and cosmetics applications.

Matrix blends can be prepared by adsorbing the antimicrobial agents of the present invention onto a solid carrier with the addition of appropriate additives in order to make granulars, wettable powders, and dispersible granulars. These matrix blends may be used as is or may be further be processed into pellets, tablets, or briquettes by any conventional means. Granulars typically comprise 1 to 60 wt% antimicrobial agent; 30 to 98 wt% of an absorbent carrier, such as diatomaceous earth, water soluble solids, magnetic particles, or fumed inorganics, such as silica, titania, and zinc oxide; and 1 to 10 wt% adjuvants. Wettable powders typically comprise 1 to 60 wt% antimicrobial agent; 1 to 5 wt% wetting agent; 1 to 20 wt% dispersant; 10 to 95 wt% adsorptive carrier, such as fumed inorganics or clay; and up to 10 wt% adjuvants. Dispersible granulars typically comprise 1 to 60 wt% antimicrobial agent; 30 to 95 wt% adsorptive carrier, such as fumed inorganics or clay; 5 to 40 wt% dispersant; up to 10 wt% surfactant; and up to 15 wt% adjuvant. Dispersible granulars may be further extruded, dried and processed into granulars.

The following examples are presented to illustrate further various aspects of the present invention, but are not intended to limit the scope of the invention in any respect.

## Example 1: Preparation of Bis(benzyloxy) Disulfide

To a solution of benzyl alcohol (4.44 mL, 42.9 mmol) and triethylamine (6.06 mL, 42.9 mmol) in ether (70 mL) and methylene chloride (30 mL) cooled to 0 °C was added dropwise a solution of $S_2Cl_2$ (1.72 mL, 22 mmol) in methylene chloride (8 mL). Three quarters of the way through the addition, the ice bath was removed. The addition was completed in an hour with stirring for 1 hr, then water (100 mL) was added. The organic phase was separated and further washed with water (3 x 80 mL) and a saturated solution of NaCl (2 x 60 mL), dried over anhydrous $MgSO_4$, filtered, and evaporated to give a crude off-white solid. Column chromatography (30% EtOAc in hexanes) of this material indicated the presence of the product (Rf: 0.62) and traces of benzyl alcohol (Rf: 0.27). The product (5.25 g) was recrystallized in a mixture of hexanes and t-BuOH. mp) = 50-51 °C; $^1$H NMR (200 MHz, CDCl$_3$) δ: 4.79, 4.90 (AB$_q$J = 11.67 Hz, 2H), 7.34 (s, 5H) ppm; $^{13}$C NMR (75 MHz, CDCl$_3$) δ: 76.74, 128.48, 128.53, 128.65 and 136.54 ppm.

## Example 2: Preparation of Bis(4-chlorobenzyloxy) Disulfide

The preparation method of Example 1 was followed, except that 4-chlorobenzyl alcohol (22 mmol) was used as the starting material. A crude light orange solid was obtained, and column chromatography (20% EtOAc in hexanes) indicated the presence of the product (Rf: 0.67) and traces of 4-chlorobenzyl alcohol (Rf: 0.15). The product (6.781 g, 86% yield) was recrystallized in pentane. mp = 46-48 °C; $^1$H NMR (200 MHz, CDCl$_3$) δ: 4.76, 4.86 (AB$_q$J = 10.41 Hz, 2H), 7.24-7.36 (m, 4H) ppm; $^{13}$C NMR (75 MHz, CDCl$_3$) δ: 75.76, 128.72, 128.91, 134.40 and 136.93 ppm.

## Example 3: Preparation of Bis(4-nitrobenzyloxy) Disulfide

The preparation method of Example 1 was followed, except that 4-nitrobenyzl alcohol (22 mmol) was used as the starting material. A crude off-white solid was obtained, and column chromatography (30% EtOAc in hexanes) indicated the presence of the product (Rf: 0.45) and traces of 4-nitrobenzyl alcohol (Rf: 0.13). The product (7.043 g, 90% yield) was recrystallized in a mixture of EtOAc and hexanes. MP = 92-93 °C; $^1$H NMR (200 MHz, CDCl$_3$) δ: 4.88, 4.99 (AB$_q$J = 12.18 Hz, 2H), 7.48 (d, J = 8.82 Hz. 2H), 8.20 (d, J - 8.71 Hz, 2H) ppm; $^{13}$C NMR (75 MHz, CDCl$_3$) δ: 75.05, 123.70, 128.61, 143.55 and 147.77 ppm.

## Example 4: Preparation of Bis(4-methylbenzyloxy) Disulfide

The preparation method of Example 1 was followed, except that 4-methylbenzyl alcohol (22 mmol) was used as the starting material. A crude beige solid was obtained, and column chromatography (30% EtOAc in hexanes) indicated the presence of the product (Rf: 0.60), a white powder (1.1 g, 63% yield). mp = 44-46 °C; $^1$H NMR (200 MHz, CDCl$_3$) δ: 3.91 (s, 3H), 4.83, 4.94 (AB$_q$J = 12.15 Hz, 2H), 7.38 (d, J = 8.52 Hz), 8.01 (d, J = 8.49 Hz, 2H) ppm; $^{13}$C NMR (75 MHz, CDCl$_3$) δ: 52.14, 75.85. 128.12, 129.81, 130.13, 141.45 and 166.68 ppm.

## Example 5: Preparation of Bis(α-methylbenzyl) Disulfide (Racemic Mixture)

The preparation method of Example 1 was followed, except that α-methylbenzyl alcohol (22 mmol) was used as the starting material. A crude clear yellow oil was obtained, and column chromatography (50% EtOAc in hexanes) indicated the presence of the product (Rf: 0.81), a clear light yellow oil (1 g, 80% yield). $^1$H NMR (300 MHz, CDCl$_3$) δ: 1.58 (d, J = 1.74 Hz), 1.61 (d, J = 1.79 Hz), 1.63 (d, J = 2.25 Hz), 1.65 (d, J - 2.25 Hz), 4.88-5.03 (two dq, 2H), 7.28-7.45 broad, aromatics, 10H) ppm; $^{13}$C NMR (75 MHz, CDCl$_3$) δ: 22.65, 23.03, 23.41, 23.61, 82.27, 82.37, 83.30, 83.50, 126.57, 126.63, 126.70, 126.73, 127.98, 128.04, 128.32, 128.42, 141.84, 141.88, 141.91 and 141.99 ppm.

## Example 6: Antimicrobial Activity of Alkoxy Disulfides

Certain compounds of the present invention were tested for activity against two microorganisms, *E coli* (gram-negative bacterium) and *S aureus* (gram-positive bacterium).

Minimum inhibitory concentration ("MIC") values were determined by a high resolution MIC ("HRMIC") method. The HRMIC method used 40 endpoints to determine the MIC. M9G (180 μL/well) was dispensed into 96 well microtiter plates. Different amounts of preservative stock solution were dispensed into rows one through seven to give 7 different, closely spaced concentrations of preservative; the eighth row is a positive growth control. Then four consecutive 1:10 dilutions were made into the second, third, and fourth columns of the plates from the first column. (Note that the concentration range of preservative in the plates can be easily changed by altering the starting stock solution of the preservative.) The plates were inoculated with 20 μL of an overnight culture adjusted to obtain a concentration of 5 x 10$^6$ cfu/mL in each well. Plates were incubated at 30° C for 24 hours and the optical density of each well was read at 650 nm using a microplate reader . The MIC is the well with the lowest concentration of chemical without growth. Values are expressed as ppm active ingredient and are the average of multiple determinations.

**Cell Counts**. Bacterial cell counts were done by the most probable number method (MPN). Cell suspension (40 μL) was pipetted into the first column of a 96 well microplate containing 160 μL/well of tryptic soy broth . Fivefold serial dilutions were performed from column 1 to column 12. Plates were incubated at 30° C for 24 hours and the optical density of each well was read at 650 nm using a microplate reader. Viable cells/mL was estimated by determining the last wells of the dilution series showing growth and calculating the most probable number of bacteria in the undiluted sample. Such calculation can be performed using statistical tables present in many microbiology texts or using a computer spreadsheet program.

| Compound | MIC (μM)[a] | |
| --- | --- | --- |
| | *E. coli* | *S. aureus* |
| 2 | 850 +/- 58 | 375 +/- 98 |
| 3 | ---b | ---b |
| 4 | ---b | 150 +/- 33 |
| 5 | ---b | 90 +/- 7 |

[a] MIC is an average plus and minus the standard deviation of 4 tests.

[b] No activity was detected at a concentration of 1000 μM or less.

The above date indicate that three of the four compounds displayed growth-inhibitory activity against the gram-positive bacterium *S. aureus,* while one displayed activity against the gram-negative bacterium *E. coli.*

The activity differential between gram-negative and gram-positive bacteria is likely due to the outer membrane present in gram-negative bacteria. which excludes bulky and/or hydrophobic compounds, and can most likely be compensated by the use of membrane disruptive materials such as chelating agents (e.g., EDTA, EGTA) or polycations (e.g., Polylysine).

**Claims**

1.   A method of inhibiting the growth of microorganisms in, at, or on a locus subject to microbial attack, comprising introducing to said locus an antimicrobially effective amount of at least one compound of formula:

$$R^1\text{-CHR}^3\text{-O-S-S-O-CHR}^4\text{-R}^2 \qquad \text{(I)}$$

wherein:

$R^1$, $R^2$   are independently selected from 5- or 6-membered aromatic rings, optionally substituted with up to 3 e-donating substituents of which 2 can optionally be combined to form another ring; and

$R^3$, $R^4$   are independently selected from H, $CH_3$, or $CH_2CH_3$.

2.   The method of claim 1, wherein the optionally substituted 5- or 6- membered aromatic rings of $R^1$, $R^2$ are independently selected from the group consisting of: benzene, naphthalene, pyridine, pyrrole, furan, and thiophene.

3.   The method of claim 2, wherein $R^1$, $R^2$ are independently selected from the group consisting of: phenyl, 4-methylphenyl, 2-chlorophenyl, 3-chlorophenyl, 4-chlorophenyl, 2-methoxyphenyl, 4-methoxyphenyl, benzyl, 4-halobenzyl, 4-nitrobenzyl, and 4-methoxybenzyl.

4.   The method of claim 1, wherein the *e-* donating substituents are selected from the group consisting of: $(C_1\text{-}C_3)$ alkyl, hydroxy, $(C_1\text{-}C_8)$ alkoxy, thiol, $(C_1\text{-}C_8)$ thioalkoxy, amino, $(C_1\text{-}C_8)$ alkylamino, $(C_1\text{-}C_8)$ dialkylamino, nitro, halo, cyano, carboxy, $(C_1\text{-}C_8)$ carboalkoxy, amido, $(C_1\text{-}C_8)$ alkylamido, $(C_1\text{-}C_8)$ dialkylamido.

5.   The method of claim 1 wherein said locus is selected from the group consisting of cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; coatings; lazures; construction products; construction adhesives; industrial or consumer adhesives; photographic chemicals; printing fluids; household products; cosmetics and toiletries; shampoos; soaps: detergents; industrial disinfectants or sanitizers; floor polishes; laundry rinse water; metalworking fluids; conveyor lubricants; hydraulic fluids; leather and leather products; textiles; textile products; wood and wood products; petroleum processing fluids; fuel; oilfield fluids; surfactant preservation; medical devices; diagnostic reagent preservation; food preservation; pools; and spas.

6.   The method of claim 1 wherein said antimicrobially effective amount of the compound of formula (I) is 0.05 to 10.000 ppm based on the weight of said locus.

**7.** The method of claim 6 wherein said antimicrobially effective amount of the compound of formula (I) is 0.1 to 5000 ppm based on the weight of the locus.

**8.** The method of claim 1 further comprising a second antimicrobial agent selected from the group consisting of: methylenebis(thiocyanate): isothiazolones; carbamates; heterocyclic compounds; oxidants; carboxylic acids and their derivatives; alcohols and amines; ammonium and phosphonium salts; aldehydes, ketones and formaldehyde releasers; halogenated aromatic compounds; halogenated aliphatic compounds; alkenes; inorganic compounds; enzymes; and surfactants.

**9.** The method of claim 8 wherein said second antimicrobial agent is selected from the group consisting of: 5-chloro-2-methyl-4-isothiazolin-3-one; 2-methyl-4-isothiazolin-3-one; 2-n-octyl-4-isothiazolin-3-one; 4,5-dichloro-2-n-octyl-4-isothiazolin-3-one; 1,2-benzisothiazolin-3-one; zinc 2-pyridinethiol-1-oxide; sodium 2-pyridinethiol-1-oxide; N'-[3,4-dichlorophenyl]-N,N-dimethylurea; 3-iodopropargyl-N-butylcarbamate; 10,10'-oxybisphenoxyarsine; 2-(thiocyanomethylthio)benzothiazole; 3-bromo-1-chloro-5,5-dimethylhydantoin; 2,2-dibromo-3-nitrilopropionamide; pentane-1,5-dial: and 2-bromo-2-nitro-1,3-propanediol.

**10.** An antimicrobial composition comprising a carrier and an antimicrobially effective amount of a compound of formula:

$$R^1\text{-CHR}^3\text{-O-S-S-O-CHR}^4\text{-R}^2 \qquad\qquad \text{(I)}$$

wherein:

$R^1$, $R^2$    are independently selected from 5- or 6-membered aromatic rings, optionally substituted with up to 3 e-donating substituents of which 2 can optionally be combined to form another ring; and

$R^3$, $R^4$    are independently selected from H, $CH_3$, or $CH_2CH_3$.

**11.** A method for treating microbial infections, comprising the local or systemic application of an antimicrobial composition of claim 9.

**12.** The method of claim 11 wherein said antimicrobially effective amount of the compound of formula (I) is 0.1 to 1000 ppm.

**European Patent Office**

## EUROPEAN SEARCH REPORT

Application Number

EP 99 30 9478

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X,D | US 3 376 322 A (THOMPSON QUENTIN E) 2 April 1968 (1968-04-02) * claim 1 * * column 7, line 1 - line 4 * --- | 10 | A01N41/02 A01N43/06 A01N43/36 A01N43/40 |
| A,D | S.L. TARDIF ET AL: "Diatomic sulfur transfer from stable alkoxy disulfides" JOURNAL OF THE AMERICAN CHEMICAL SOCIETY., vol. 117, 1995, pages 9067-9068, XP002134720 AMERICAN CHEMICAL SOCIETY, WASHINGTON, DC., US ISSN: 0002-7863 * table 1 * ----- | 1-4 | |
| | | | TECHNICAL FIELDS SEARCHED (Int.Cl.7) |
| | | | A01N |

The present search report has been drawn up for all claims

| Place of search | Date of completion of the search | Examiner |
|---|---|---|
| THE HAGUE | 4 April 2000 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 9478

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2000

| Patent document cited in search report | Publication date | Patent family member(s) | Publication date |
|---|---|---|---|
| US 3376322 A | 02-04-1968 | NONE | |

EPO FORM P0459

For more details about this annex : see Official Journal of the European Patent Office, No. 12/82